# EUROPÄISCHE PATENTANMELDUNG

(11) **EP 1 350 594 A2**
(43) Veröffentlichungstag der Anmeldung: **08.10.2003**
(21) Anmeldenummer: 03004589.2
(22) Anmeldetag: 28.02.2003
(51) Int. Cl.: B23Q 1/48, B23Q 1/56, B23Q 1/62

(54) **Bearbeitungsmaschine zum mehrachsigen Bewegen eines Werkzeuges oder Werkstückes**

(30) Priorität: 26.03.2002 DE 10213755
(71) Anmelder: EMAG MASCHINENFABRIK GMBH, D-73084 Salach (DE)
(72) Erfinder: Hessbrüggen, Norbert, 73084 Salach (DE); Walz, Jürgen, 72636 Frickenhausen (DE); Wernz, Christoph, 70174 Stuttgart (DE); Boehringer, Hans Georg, 89191 Nellingen (DE)

(57) **Zusammenfassung**

Die Erfindung betrifft eine Werkzeugmaschine zum mehrachsigen Bewegen eines Werkzeuges oder Werkstückes, wobei ein Werkzeug- und Werkstückträger relativ zueinander bewegbar sind und mittels Schlitten relativ zum Maschinengestell bewegt werden können. Ein ebenes Koppelgetriebe führt sämtliche Bewegungen zum Positionieren der Arbeitsspindel innerhalb einer Ebene durch zwei angenommene Hauptachsen des Maschinenkoordinatensystems aus.

## Beschreibung

Die Erfindung betrifft eine Werkzeugmaschine zum mehrachsigen Bewegen eines Werkzeuges oder Werkstückes.

### [Stand der Technik]

Derartige Werkzeugmaschinen sind bekannt, wobei ein Werkzeugund Werkstückträger relativ zueinander bewegbar sind und mittels Schlitten relativ zum Maschinengestell bewegt werden können. Die dabei häufig eingesetzten Kreuzschlitten haben den Nachteil, dass große Massen zu bewegen sind. Die DE 198 06 085 A1 zeigt eine Werkzeugmaschine mit zwei an Schlitten gelagerten Koppeln, welche Bewegungen in der X-Y-Ebene ermöglichen. Für die in Z-Richtung erforderlichen Bewegungen trägt eine der beiden Koppeln einen Schlitten. Schwenkbewegungen der Arbeitsspindel, beispielsweise um die B-Achse, sind bei dieser Maschine nicht vorgesehen. Zur weiteren Reduzierung der bewegten Massen wurde in der EP 1 106 304 A1 eine Parallelkinematik vorgeschlagen, welche drei jeweils mit einem Schlitten gelenkig verbundene Parallelogrammführungen mit je einem NC-gesteuerten Linearantrieb umfasst. Diese Anordnung ermöglicht eine dreidimensionale Bewegbarkeit des Werkzeug- oder Werkstückträgers.

### [Aufgabe der Erfindung]

Der Erfindung liegt die Aufgabe zugrunde, eine Werkzeugmaschine zu schaffen, bei welcher die in einer Ebene bewegten Massen möglichst gering gehalten werden können.

### [Beispiele]

Diese Aufgabe wird gelöst durch eine Werkzeugmaschine nach Anspruch 1.

Die Erfindung beruht auf der Erkenntnis, dass es vorteilhaft ist, den Werkzeug- oder Werkstückträger an einem mindestens viergliedrigen Koppelgetriebe anzuordnen, wobei zwei Schwingen des Koppelgetriebes an Schlitten gelagert sind, welche mit Hilfe je eines Antriebes relativ zum Maschinengestell auf Führungen verstellbar sind. Als besonders günstig erweist sich bei dieser Anordnung, dass alle erforderlichen Bewegungen in der X-Z- Ebene, auch die Schwenkbewegung um die B-Achse, mit einem einzigen Linearführungssystem realisiert werden können.
Bei einer bevorzugten Ausführung ist eine Schwinge des Koppelgetriebes über einen Hebel mit einem weiteren Schlitten gelenkig verbunden. Mittels dieses Schlittens kann die Schwinge um ihr Fußlager geschwenkt werden. In Zusammenwirkung mit dem Schlitten der zweiten Schwinge lässt sich die Koppel und mit ihr der Werkzeug- oder Werkstückträger innerhalb der Arbeitsebene durch zwei angenommene Hauptachsen des Maschinenkoordinatensystems bewegen und in die gewünschten Schwenkpositionen bringen und fixieren.

Gemäß einer weiteren bevorzugten Ausführung trägt die Koppel einen Werkstückträger, bestehend aus einer Motorspindel und einem Spannfutter. Die Motorspindel arbeitet nach dem Pick-up-Prinzip, d.h. sie entnimmt die Werkstücke von einer Transporteinrichtung, transportiert sie zu mindestens einer Bearbeitungsstation und legt sie nach erfolgter Bearbeitung wieder auf der Transporteinrichtung ab. In der mindestens einen Bearbeitungsstation sind Werkzeuge für die in Werkzeugmaschinen üblichen Arbeitsgänge wie Drehen, Fräsen, Bohren, Schleifen etc. vorgesehen.

Eine weitere vorteilhafte Ausbildung der Erfindung sieht vor, dass mindestens eine Bearbeitungsstation in senkrechter Richtung zur Bewegungsebene des Koppelgetriebes (in Y-Richtung) auf Führungen gegenüber dem Maschinengestell bewegt werden kann.

Zur Begrenzung des erforderlichen Bauraums für die Werkzeugmaschine können nach einer weiteren Ausbildung der Erfindung die Schwingen des Koppelgetriebes über Kreuz angeordnet sein oder mindestens eine Schwinge des Koppelgetriebes ist in ihrer Länge veränderlich ausgeführt.

Der Vorteil des erfindungsgemäßen ebenen Koppelgetriebes besteht darin, dass sämtliche Schlitten nur in einer Achsrichtung bewegbar sind und alle dafür erforderlichen Antriebe am Maschinengestell angeordnet werden können.

Die Erfindung wird nachfolgend anhand eines in der Zeichnung dargestellten Ausführungsbeispieles näher erläutert; es zeigen:
- Fig.1: eine schematische Darstellung einer erfindungsgemäßen Werkzeugmaschine im Querschnitt mit Arbeitsspindel in vertikaler Position
- Fig. 2: eine schematische Darstellung einer erfindungsgemäßen Werkzeugmaschine mit Arbeitsspindel in horizontaler Position
- Fig. 3: eine schematische Darstellung einer Werkzeugmaschine mit längenveränderlicher Schwinge und Arbeitsspindel in Pick-up-Position
- Fig.4: eine schematische Darstellung Werkzeugmaschine mit über Kreuz angeordneten Schwingen

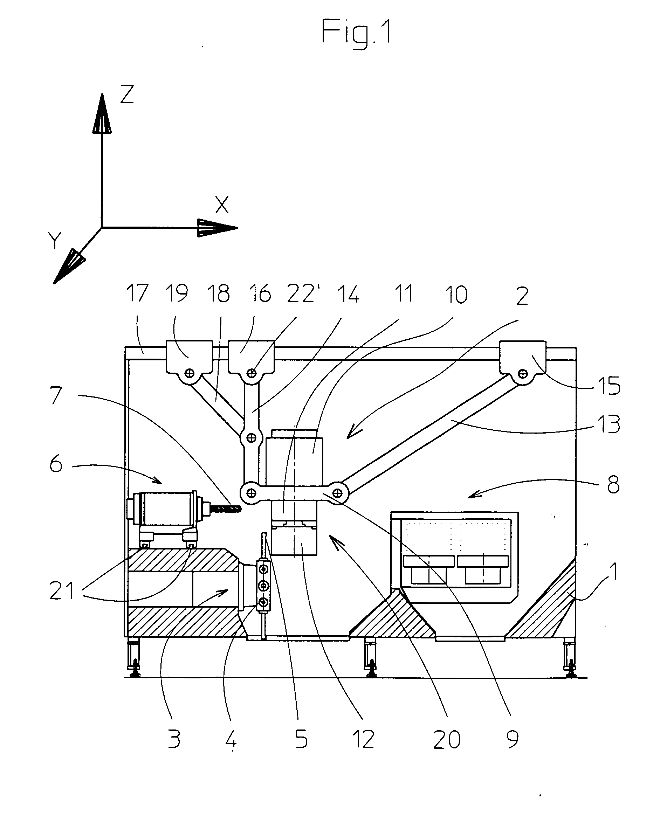

Die in Fig. 1 nur teilweise dargestellte Werkzeugmaschine dient zur mehrachsigen Bearbeitung von Werkstücken. Sie umfasst ein Maschinengestell 1, ein Koppelgetriebe 2, eine Bearbeitungsstation 3, eine Werkzeugrevolver 4 mit Werkzeugen 5, eine weitere Bearbeitungsstation 6 mit einem angetriebenen Werkzeug 7 und eine Transporteinrichtung 8. Das Koppelgetriebe 2 besteht aus der Koppel 9, welche die Arbeitsspindel 20 mit Spindelmotor 10 und Spannfutter 11 trägt, und den beiden Schwingen 13 und 14. Die Schwingen 13 und 14 sind an Schlitten 15 und 16 gelagert, welche mit Hilfe nicht dargestellter Antriebe relativ zum Maschinengestell 1 auf Führungsbahnen 17 verstellbar sind. Die Schwinge 14 ist über einen Hebel 18 mit einem weiteren Schlitten 19 gelenkig verbunden. Durch Verschieben der Schlitten 16 und 19 relativ zueinander lässt sich die Schwinge 14 um das Gelenk 22' drehen. Dabei kann unter Zusammenwirkung mit dem Schlitten 15 und der Schwinge 13 die Koppel 9 mit der Arbeitsspindel 20 innerhalb der X-Z-Ebene bewegt und in die gewünschten Schwenkpositionen gebracht und fixiert werden.

Das Spannfutter 11 dient zum Greifen und Spannen von Werkstücken 12. Während eines Bearbeitungszyklusses greift die Arbeitsspindel 20 mittels des Spannfutters 11 ein Werkstück 12 vom der Transporteinrichtung 8, transportiert es zu den Bearbeitungsstationen 3 und 6 und legt es nach erfolgter Bearbeitung wieder auf der Transporteinrichtung ab.

Die Bearbeitungsstation 6 ist auf Führungen 21 gegenüber dem Maschinengestell 1 beweglich geführt und erlaubt Bewegungen in Richtung der Y-Achse. In Fig. 1 ist die Arbeitsspindel 20 in vertikaler Position dargestellt, um beispielsweise das Werkstück 12 einer Drehbearbeitung durch das Werkzeug 5 zu unterziehen.

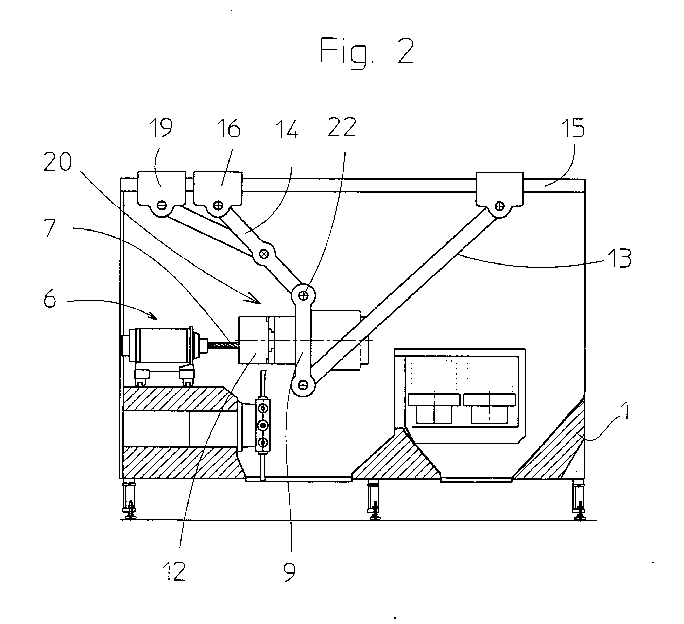

Fig. 2 zeigt eine erfindungsgemäße Werkzeugmaschine mit der Arbeitsspindel 20 in horizontaler Position. Durch Verfahren der Schlitten 16 und 19 schwenkt die Schwinge 14 in eine schräge Position und durch gleichzeitiges Bewegen des Schlittens 15 dreht sich die Schwinge 9 um das Gelenk 22 und schwenkt dabei die Arbeitsspindel 20 in die Horizontale. In dieser Lage kann das Werkstück 12 in der Bearbeitungsstation 6 vom Werkzeug 7 durch Fräsen, Bohren, Gewindeschneiden etc. bearbeitet werden.

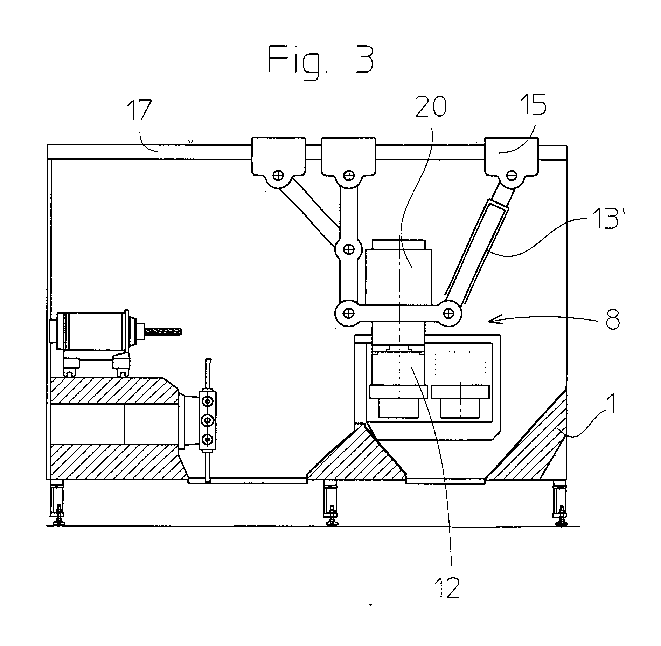

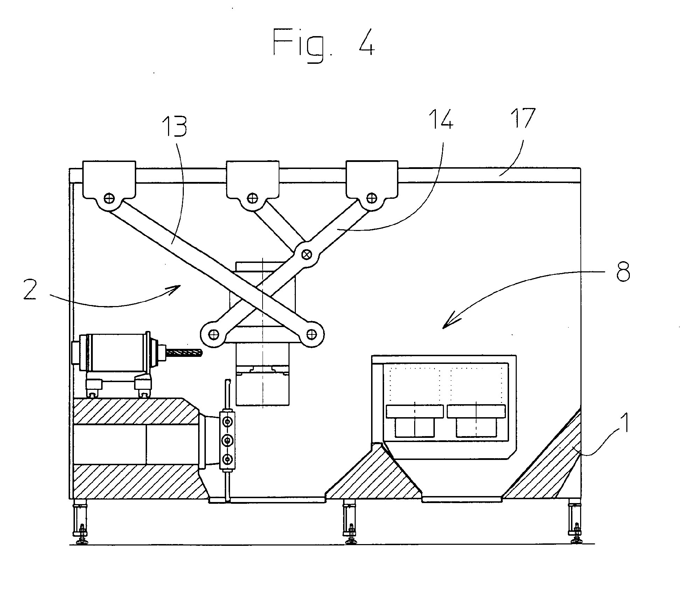

In Fig. 3 ist eine vorteilhafte Ausbildung der Erfindung mit längenveränderlicher Koppel 13' dargestellt. Die Arbeitsspindel 20 befindet sich in einer Position oberhalb der Transporteinrichtung 8 zum Greifen oder Ablegen von Werkstücken 12. Die beiden Schwingen 13 und 14 müssen einerseits eine bestimmte Minimallänge aufweisen, damit alle gewünschten Positionen innerhalb der X-Z-Ebene von der Arbeitsspindel 20 angefahren werden können. Andererseits resultieren daraus vergleichsweise große Fahrwege insbesondere für den Schlitten 15. Eine starre Schwinge 13 würde in Fg. 3 eine beträchtliche Verbreiterung des Maschinengestells 1 erfordern, zumindest müsste die Führungsbahn 17 über den rechten Rand des Maschinengestells hinaus verlängert werden. Gemäß Fig. 3 ist daher eine längenveränderbare Schwinge 13' vorgesehen, welche zum Schwenken der Arbeitsspindel 20 ein- und ausgefahren werden kann. In Fig. 4 sind die Schwingen 13 und 14 über Kreuz angeordnet. Auch bei dieser Anordnung sind eine Verbreiterung des Maschinengestells oder eine Verlängerung der Führungsbahn 17 nicht erforderlich.

### [Bezugszeichenliste]

- 1: Maschinengestell
- 2: Koppelgetriebe
- 3: Bearbeitungsstation
- 4: Werkzeugrevolver
- 5: Werkzeug
- 6: Bearbeitungsstation
- 7: Werkzeug
- 8: Transporteinrichtung
- 9: Koppel
- 10: Spindelmotor
- 11: Spannfutter
- 12: Werkstück
- 13: 13' Schwinge
- 14: Schwinge
- 15: Schlitten
- 16: Schlitten
- 17: Führungsbahn
- 18: Hebel
- 19: Schlitten
- 20: Arbeitsspindel
- 21: Führungen
- 22: 22' Gelenk

## Patentansprüche

1. Werkzeugmaschine zur mehrachsigen Bearbeitung von Werkstücken 11 mit einem Maschinengestell 1, mit einem Werkstückträger 2, mit mindestens einem Werkzeugträger 4, 6, welche relativ zueinander verschiebbar sind, und mit einem ebenen Koppelgetriebe 2,
**dadurch gekennzeichnet,**
**dass** das Koppelgetriebe 2 sämtliche Bewegungen zum Positionieren des Werkstück- oder Werkzeugträgers innerhalb einer Ebene durch zwei angenommene Hauptachsen des Maschinenkoordinatensystems ausführt.

2. Werkzeugmaschine nach Anspruch 1, **dadurch gekennzeichnet, dass** das Koppelgetriebe 2 mindestens viergliedrig ist.

3. Werkzeugmaschine nach Anspruch 1 oder 2, **dadurch gekennzeichnet, dass** das Koppelgetriebe 2 in der X-Z-Ebene eine Schwenkbewegung der Arbeitsspindel 20 ermöglicht.

4. Werkzeugmaschine nach einem der Ansprüche 1 bis 3,
**dadurch gekennzeichnet, dass** die Arbeitsspindel 20 nach dem Pick-up-Prinzip arbeitet.

5. Werkzeugmaschine nach einem der vorhergehenden Ansprüche, **dadurch gekennzeichnet, dass** mindestens eine Schwinge 13' des Koppelgetriebes 2 in ihrer Länge veränderlich ist.

6. Werkzeugmaschine nach einem der vorhergehenden Ansprüche, **dadurch gekennzeichnet, dass** die Schwingen 13 und 14 über Kreuz angeordnet sind.

7. Werkzeugmaschine nach einem der vorhergehenden Ansprüche, **dadurch gekennzeichnet, dass** der Werkstückträger als Werkstückrundtisch ausgeführt ist.
